(19) Europäisches Patentamt
European Patent Office
Office européen des brevets

(11) **EP 0 946 888 B1**

(12) **EUROPÄISCHE PATENTSCHRIFT**

(45) Veröffentlichungstag und Bekanntmachung des Hinweises auf die Patenterteilung:
**13.03.2002 Patentblatt 2002/11**

(21) Anmeldenummer: **97953653.9**

(22) Anmeldetag: **19.12.1997**

(51) Int Cl.$^7$: **G01V 15/00**

(86) Internationale Anmeldenummer:
**PCT/DE97/02980**

(87) Internationale Veröffentlichungsnummer:
**WO 98/28639 (02.07.1998 Gazette 1998/26)**

(54) **ANZEIGEELEMENT FÜR DIE VERWENDUNG IN EINEM MAGNETISCHEN WARENÜBERWACHUNGSSYSTEM**

DISPLAY ELEMENT FOR USE IN A MAGNETIC MERCHANDISE MONITORING SYSTEM

ELEMENT D'AFFICHAGE S'UTILISANT DANS UN SYSTEME MAGNETIQUE DE SURVEILLANCE DE MARCHANDISES

(84) Benannte Vertragsstaaten:
**DE ES FR GB IT**

(30) Priorität: **20.12.1996 DE 19653430**

(43) Veröffentlichungstag der Anmeldung:
**06.10.1999 Patentblatt 1999/40**

(73) Patentinhaber: **Vacuumschmelze GmbH**
**63450 Hanau (DE)**

(72) Erfinder: **HERZER, Giselher**
**D-63486 Bruchköbel (DE)**

(74) Vertreter: **Patentanwälte**
**Westphal, Mussgnug & Partner**
**Waldstrasse 33**
**78048 Villingen-Schwenningen (DE)**

(56) Entgegenhaltungen:
**US-A- 2 705 302          US-A- 2 828 467**
**US-A- 5 003 291          US-A- 5 495 231**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Anzeigeelement für die Verwendung in einem magnetischen Warenüberwachungssystem bestehend aus einem oder mehreren länglichen, duktilen magnetostriktiven, aus amorphen ferromagnetischem Material bestehenden Streifen, welche durch Änderung eines Vormagnetisierungsfeldes eine Änderung der Resonanzfrequenz erfahren und welche durch ein magnetisches Wechselfeld zu longitudinalen, mechanischen Resonanzschwingungen bei der Resonanzfrequenz $f_r$ anregbar sind, wobei die aus den Resonanzschwingungen resultierenden mechanischen Spannungen eine Änderung der Magnetisierung der Streifen und damit eine detektierbare Veränderung des magnetischen Wechselfeldes bewirken.

Wenn man einen Streifen aus amorphen magnetostriktiven Material einem Magnetfeld aussetzt, so bedingt die Magnetostriktion eine Längenänderung des Streifens. Bei positiver Magnetostriktion wird sich der Streifen mit zunehmendem Magnetfeld längen. Diese Abhängigkeit ist jedoch nicht linear, sondern abhängig von den Abmessungen des Streifens und von der Größe des Magnetfeldes. Erhöht man das Magnetfeld schrittweise um jeweils den gleichen Betrag bei einem bestimmten Streifen, so stellt man fest, daß zunächst nur kleine Längenänderungen erfolgen, daß die Längenänderungen mit zunehmenden Schritten für die Erhöhung der Magnetisierung größer werden und daß bei Eintritt der Sättigung trotz weiterer schrittweise erhöhtem Magnetfeld keine weitere Längenänderung erfolgt.

Diese Eigenschaft bewirkt, daß sich ein derartiger Streifen vorzugsweise dann zu mechanischen Schwingungen anregen läßt, wenn er einem Vormagnetisierungsfeld ausgesetzt ist, dessen Größe eine hohe Längenänderung bei gleicher Änderung des Magnetfeldes zur Folge hat. Weiterhin bewirkt die durch das Magnetfeld erfolgende Längenänderung, daß sich in diesem Bereich die Länge des Streifens ändert, ohne daß eine Zugkraft auf den Streifen wirkt.

Bei der mechanischen Schwingung eines Streifens ist für die Resonanzfrequenz der Schwingung der Elastitzitätsmodul des Materials maßgebend. Je größer dieser Elastitzitätsmodul ist, umso größer ist eine für eine bestimmte Längenänderung erforderliche Kraft und umso höher wird die Resonanzfrequenz des schwingenden Streifens sein. Durch die Einwirkung des Magnetfeldes erfolgt nun aber eine zusätzliche Längenänderung, ohne daß eine Kraft notwendig ist. Das Material wirkt also so, als ob es einen geringeren als den mechanischen Elastitzitätsmodul haben würde.

Dies hat zur Folge, daß mit zunehmender Vormagnetisierung bei Anregung mechanischer Schwingungen durch ein magnetisches Wechselfeld die Resonanzfrequenz niedriger wird, als sie ohne Vormagnetisierung des Streifens ist. Ein Streifen, der bei gegebener Vormagnetisierung bei einer bestimmten Resonanzfrequenz mit hoher Signalamplitude schwingt, wird bei Anregung mit gleicher Frequenz wesentlich weniger schwingen, wenn das Vormagnetisierungsfeld entfernt wird, da sich die Resonanzfrequenz dadurch erhöht und die anregende Frequenz und die Resonanzfrequenz nicht mehr übereinstimmen.

Außerdem bewirkt die Entfernung des Vormagnetisierungsfeldes, daß eine Änderung des Magnetfeldes nur noch eine relativ geringe Änderungen der Länge des Streifens zu Folge hat, so daß ohne Vormagnetisierungsfeld auch die Signalhöhe wesentlich abnimmt.

Beide Faktoren zusammen haben zur Folge, daß bei Entfernung des Vormagnetisierungsfeldes ein mechanisches Schwingen des Streifens unterbunden wird. Es ist also möglich, ein Anzeigeelement aus diesem Material dadurch zu deaktivieren, daß man das Vormagnetisierungsfeld entfernt.

Dies wird bei Anzeigeelementen beispielsweise dadurch erreicht, daß man einen mit dem weichmagnetischen Streifen verbundenen halbhartmagnetischen weiteren Streifen entmagnetisiert. Bei anderen Systemen, bei denen das Vormagnetisierungsfeld von einer Spule im Untersuchungsbereich miterzeugt wird, läßt sich die Schwingung unterbinden, indem man dieses Vormagnetisierungsfeld abschaltet.

Aus der WO 88/01427 sind Warensicherungssysteme auf magnetoelastischer Basis beschrieben, bei denen nicht nur festgestellt werden kann, ob ein oder mehrere aktivierte Anzeigeelemente im Sicherungsbereich vorhanden sind oder nicht sondern auch die Anzahl der im Sicherungsbereich vorhandenen aktivierten Anzeigeelemente und/oder deren Identität festgestellt werden kann. In der WO 88/01427 wird ferner beschrieben, daß bei der Verwendung magnetoeleastischer Anzeigeelemente die Identifizierung im wesentlichen darauf beruht, daß das Vorhandensein mehrerer Resonanzfrequenzen im Sicherungsbereich abgefragt wird. Da in den Anzeigeelementen selbst immer nur die Projektion des äußeren Feldes auf die Streifenlängsachse wirksam ist, ermöglicht dies, die unterschiedliche Streifenorientierungen zu detektieren. Hiermit lassen sich beispielsweise durch unterschiedliche Streifenorientierungen innerhalb eines Anzeigeelements die einzelnen Objekte individuell kennzeichnen und auch räumlich auflösen.

Aus der WO 90/03652 sind ferner Legierungen mit hoher Magnetostriktion bekannt, die neben Eisen im wesentlichen Nickel enthalten, und für Anzeigeelemente der eingangs genannte Art vorgeschlagen werden. Diese Legierungen weisen aber keine starke Änderungen der Resonanzfrequenz mit dem vormagnetisierten Feld auf und haben auch nicht gleichzeitig eine hohe Signalamplitude und eine gute Resonatorgüte. Anzeigeelemente, die mit Streifen aus solchen Legierungen versehen sind, weisen ein nur kurzes Nachschwingen des Signals nach Abschalten der äußeren Anregung auf, so daß ihre Detektionsfähigkeit stark eingeschränkt ist.

Aus der US-A-5,495,231 sind ferner Anzeigeelemente für die Verwendung in einem magnetischen Warenüberwachungssystem bekannt, die aus einem oder mehreren länglichen, duktilen, magnetostriktiven, aus amorphen ferromagnetischem Material bestehenden Streifen bestehen, welche durch Änderung eines Vormagnetisierungsfeldes $H_{Bias}$ eine Resonanzfrequenzänderung $df_r/dH_{Bias}$ erfahren, und welche durch ein magnetisches Wechselfeld zu longitudinalen, mechanischen Resonanzschwingungen bei der Resonanzfrequenz $f_r$ anregbar sind, wobei die aus den Resonanzschwingungen resultierenden mechanischen Spannungen eine Magnetisierungsänderung der Streifen und damit eine detektierbare Veränderung des magnetischen Wechselfeldes bewirken. Die dort vorgeschlagenen Legierungen weisen eine flache B-H-Schleife auf, die bis in den Bereich der Sättigung möglichst linear verläuft, wobei ein Streifen des Materials eine magnetische Anisotropie quer zur Streifenlängsrichtung aufweist und die Anisotropiefeldstärke $H_{aniso}$ größer als die Vormagnetisierungsfeldstärke $H_{Bias}$ ist.

Aufgabe der vorliegenden Erfindung ist es daher, solche Anzeigeelemente dahingehend weiterzuentwickeln, daß eine hohe Signalamplitude und ein langes Anhalten des Signals nach Abschalten des erregenden Feldes eine geringe Abhängigkeit der Resonanzfrequenz von der vormagnetisierenden Feldstärke sowie gleichzeitig eine sichere Deaktivierungsmöglichkeit des Streifens vorliegt, sowie eine hohe Resonatorgüte.

Erfindungsgemäß wird diese Aufgabe dadurch gelöst, daß die Änderung der Resonanzfrequenz der Streifen gegenüber der Änderung der Vormagnetisierungsfeldstärke $df_r/dH_{Bias} \geq 18{,}75$ Hz m/A, vorzugsweise $df_r/dH_{Bias} \geq 25$ Hz m/A ist und hierbei die Streifen in einem Feldbereich $dH_{Bias} \geq 1$ Oe die Resonantorgüte $Q \geq 100$ aufweisen.

Durch die Verwendung solcher Anzeigeelemente wird sowohl eine sehr starke Änderung der Resonanzfrequenz mit dem vormagnetisierenden Feld gewährleistet, als auch eine gleichzeitig hohe Signalamplitude und gute Resonatorgüte, das heißt unter anderem ein sehr langes Nachschwingen des Signals nach Abschalten der äußeren Anregung.

Darüber hinaus zeigt die Verwendung solcher Materialien weitere große Vorteile, die im folgenden eingehend beschrieben werden.

Vorteilhafte Weiterbildungen der Erfindung sind Gegenstand der Unteransprüche.

Die Erfindung ist in der Zeichnung beispielsweise veranschaulicht und im nachstehenden, im einzelnen anhand der Figuren beschrieben. Dabei zeigen:

Figur 1      B-H-Schleifen von erfindungsgemaßen Streifen,

Figur 2      die Resonanzfrequenz $f_r$ als Funktion des vormagnetisierenden Feldes H,

Figur 3      das typische Resonanzverhalten der Signalamplitude für die erfindungsgemäßen Streifen,

Figur 4      der zeitliche Verlauf der Resonanzamplitude nach Abschalten der Wechselfelderregung,

Figur 5      die Resonatorgüte Q in Abhängigkeit des vormagnetisierenden Feldes H,

Figur 6      die Resonanzamplitude 2msec nach Abschalten des erregenden Wechselfeldes als Funktion des vormagnetisierenden Gleichfeldes,

Figur 7      die Variation der Resonanzfrequenz als Funktion des vormagnetisierenden Gleichfeldes und

Figur 8      die Änderung der Resonanzfrequenz, nachdem das vormagnetisierende Feld H mit einem niederfrequenten Wechselfeld der Stärke $\Delta H_{Bias} = 40$ A/m moduliert wird.

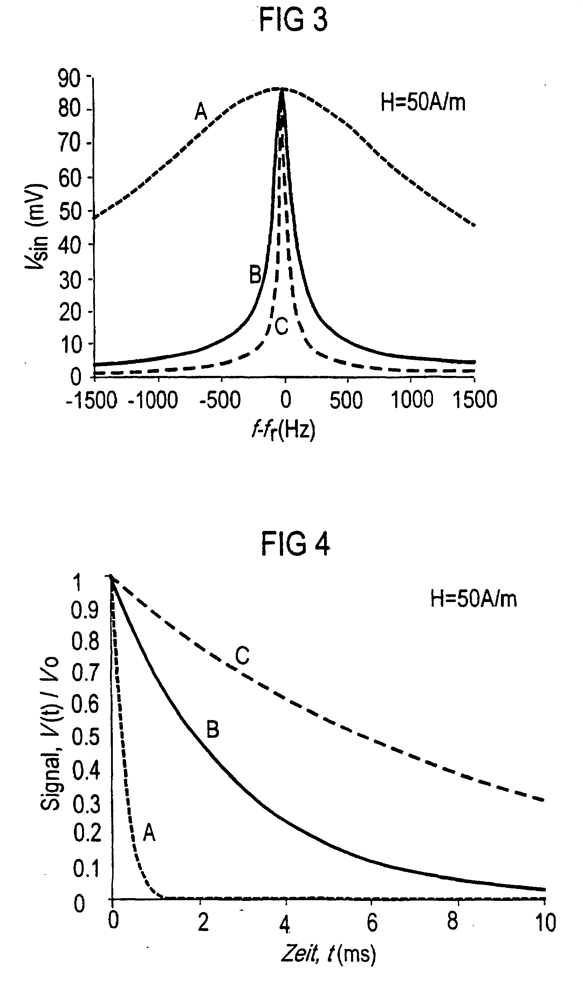

Kernstück eines Anzeigeelementes sind ein oder mehrere ferromagnetische, magnetostriktive Streifen, welche durch ein magnetisches Wechselfeld zu longitudinalen, mechanischen Resonanzschwingungen angeregt werden. Aufgrund der magnetostriktiven Kopplung bewirken die mit der Schwingung verknüpften mechanischen Spannungen eine Magnetisierungsänderung, welche in der Empfängerspule eine entsprechende Spannung induziert, womit das Anzeigeelement nachgewiesen werden kann. Die Figur 3 illustriert dabei die resonanzartige Überhöhung der induzierten Spannung als Funktion der Frequenz des erregenden Wechselfeldes.

Neben der Signalverstärkung durch Resonanzüberhöhung ist ein weiterer, entscheidender Vorteil dieser magnetoelastischen Warensicherungssysteme, daß die mechanische Schwingung und damit verknüpft die induzierte Spannung auch nach Abschalten der äußeren Erregung bestehen bleibt.

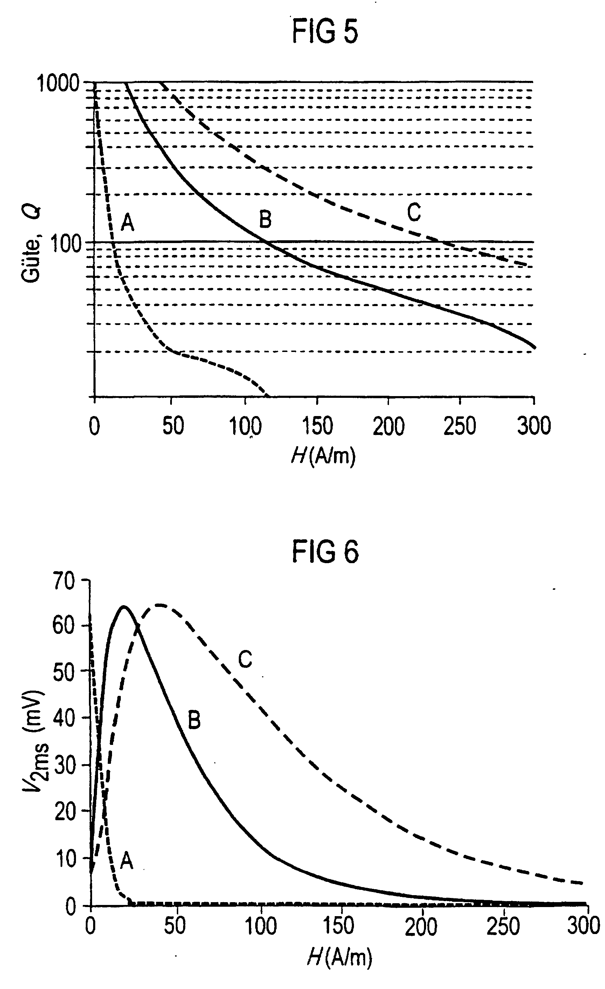

Das Signal hält typischerweise einige msec an. Die Figur 6 gibt eine schematische Darstellung für dieses Verhalten. Dies ist ein mehr oder weniger einzigartiges Merkmal und reduziert mögliche Fehlalarme durch zum Beispiel Einkaufswagen und andere magnetische Gegenstände auf ein absolutes Minimum. Da das anregende Magnetfeld in den Empfängerspulen ebenfalls eine Spannung induziert, ist ferner klar, daß die Empfindlichkeit des Systems erhöht wird, wenn dieser Störhintergrund wegfällt.

Ausgegangen wird von magnetostriktiven Legierungen auf Eisenbasis mit Nickel und/oder Kobalt-Zusätzen, welche in einem Magnetfeld so wärmebehandelt werden, daß sich eine uniaxiale magnetische Anisotropie quer zur Bandlängsrichtung ergibt. Die Streifen für die Anzeigeelemente werden typischerweise aus der Schmelze mittels Rascherstarrung gegossen und danach in einem Magnetfeld quer zur Bandrichtung (Querfeld) einer Wärmebehandlung unterzogen und danach abgelängt.

Vorzugsweise wird die Wärmebehandlung im Durchlauf vollzogen und die Durchlaufgeschwindigkeit so gewählt, daß das Band für eine Wärmebehandlungszeit $0{,}5\text{sec} \leq T \leq 30\text{sec}$ auf eine Temperatur $300°C \leq T \leq 440°C$ erwärmt wird.

Im folgenden wurden für 3 Beispielslegierungen mit unterschiedlichen Anisotropiefeldstärken die zu erwartenden magnetoelastischen Eigenschaften untersucht. Die hierfür zugrunde gelegten Legierungen und die primären Materialparameter sind in den Tabellen 1 und 2 zusammengefaßt.

Tabelle 1:

| Materialparameter für die drei untersuchten Fallbeispiele. Die typische Wärmebehandlung zur Einstellung des angegebenen Anisotropiefeldes lag bei ca. einigen Sekunden im Temperaturbereich zwischen 300°C und 400°C. | | | | | |
|---|---|---|---|---|---|
| **Fall** | **Legierung (at%)** | $J_s$ **(T)** | $\lambda_s$ **(ppm)** | $E_s$ **(GPa)** | $H_K$ **(A/m)** |
| A | $Fe_{81}Si_{3.5}B_{13.5}C_2$ | 1.58 | 35.6 | 183 | 146 |
| B | $Fe_{62}Ni_{20}Si_2B_{16}$ | 1.44 | 32.5 | 169 | 360 |
| C | $Fe_{62}Ni_{20}Si_2B_{16}$ | 1.44 | 32.5 | 169 | 510 |

Tabelle 2:

| Probenabmessungen und Anregungsbedingungen für die untersuchten Fallbeispiele | |
|---|---|
| Streifenlänge | 60 mm |
| Bandbreite: | 2 mm |
| Banddicke: | 25 µm |
| | |
| Wechselfeld: | $H_{ac}$ = 1 A/m |
| Pick-Up-Spule: | 100 Windungen |

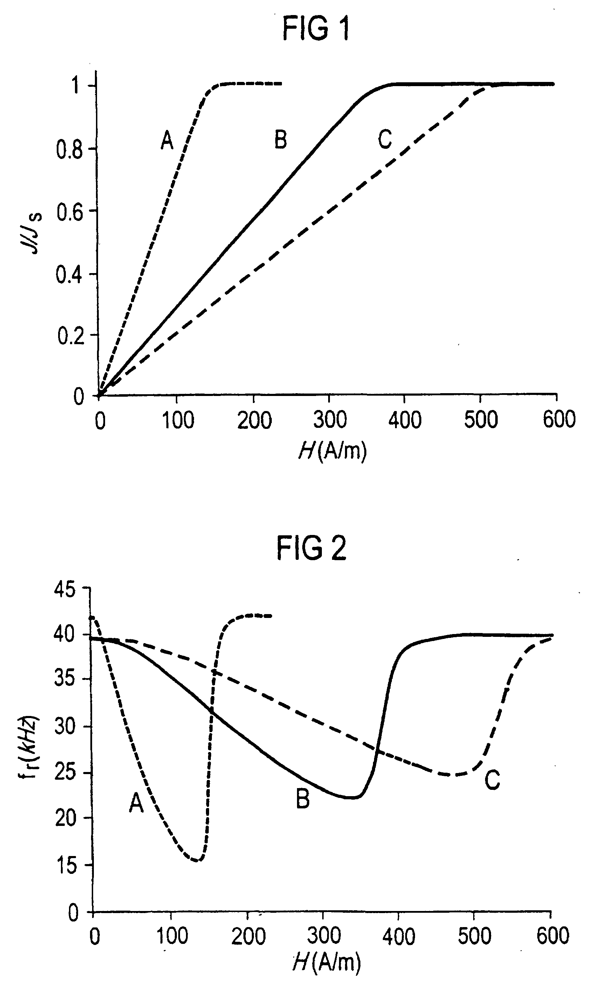

Die Figur 1 zeigt die typischen B-H-Schleifen, wie sie sich nach der Wärmebehandlung ergeben.

Die Figur 2 zeigt den Verlauf der Resonanzfrequenz als Funktion des äußeren vormagnetisierenden Feldes. Die stärkste Änderungen der Resonanzfrequenz ergibt sich aufgrund des kleinen Anisotropiefeldes im Beispiel A, welches deshalb am besten die oben diskutierten Anforderungen erfüllt. Es handelt sich hierbei um die Legierung $Fe_{81}Si_{3.5}B_{13.5}C_2$, welche aufgrund der in Figur 2 gezeigten Eigenschaften auch als besonders vorteilhaft für magnetoelastische Anwendungen ist.

Da jedoch ein kleines Anisotropiefeld und eine höhe Änderung des effektiven Elastizitätsmoduls mit der Vormagnetisierung (ΔE-Effekt) auch eine starke Dämpfung der mechanischen Schwingung bewirkt, ergibt sich eine sehr große Halbwertsbreite der Resonanzkurve, was in der Figur 3 zu sehen ist, beziehungsweise ein sehr schnelles Abklingen der Resonanzamplitude nach Abschalten des erregenden Wechselfeldes, was in Figur 4 dargestellt ist. Beide Effekte sind nachteilig.

Die große Halbwertsbreite $\Delta f_r$ der Resonanzkurve erschwert die Auflösung der genauen Resonanzfrequenz. Hat man mehrere Streifen mit unterschiedlicher Resonanzfrequenz, so müssen bei großen Werten von $\Delta f_r$ die individuellen Resonanzfrequenzen der einzelnen Streifen weit auseinander liegen, um die Streifen sicher unterscheiden zu können. Damit reduziert sich naturgemäß die Zahl der Codierungsmöglichkeiten gegenüber einer Anordnung von Streifen mit $\Delta f_r$, das heißt hoher Resonatorgüte Q. Die beiden letztgenannten Größen hängen über

$$\Delta f_r = f_r/Q$$

zusammen. Die genauen Zusammenhänge sind in dem Buch von RM Bozorth, Ferromagnetism, Van Nostrant, Princeton, 1951, Seiten 699ff zu entnehmen.

Das schnelle Abklingen der Signalamplitude nach Abschalten des erregenden Feldes erschwert die sichere Detektion des Streifens. Die Abklingzeit $\tau$, nach der das Signal auf 1/e-tel seines ursprünglichen Wertes abgeklungen ist, ist mit der Resonatorgüte über die Beziehung

$$Q = \pi f_r \tau$$

verknüpft. Für die Resonanzamplitude als Funktion der Zeit folgt

$$V(t) \sim Q\{1-[f_r(H)/f_r(0)]^2\} \exp(-\pi f_r t/Q).$$

Figur 5 zeigt die Resonatorgüte Q der untersuchten Beispiele als Funktion des vormagnetisierenden Feldes. Während im Fall A, abgesehen von sehr kleinen Feldstärken, die Resonatorgüte Q sehr klein ist, zeigen die beiden anderen Beispiele wesentlich bessere Güten und erfüllen daher die zweite Anforderung der Anwendung wesentlich besser.

Dies äußert sich natürlich auch in der Resonanzamplitude, insbesondere nach Abschalten des äußeren erregenden Feldes. So ergibt sich im Fall A ein vernünftiges, detektierbares Signal nur in einem sehr kleinen Bereich des vormagnetisierenden Feldes, während in den Fällen B und C sich über einen weiten Feldbereich eine hohe Signalamplitude ergibt.

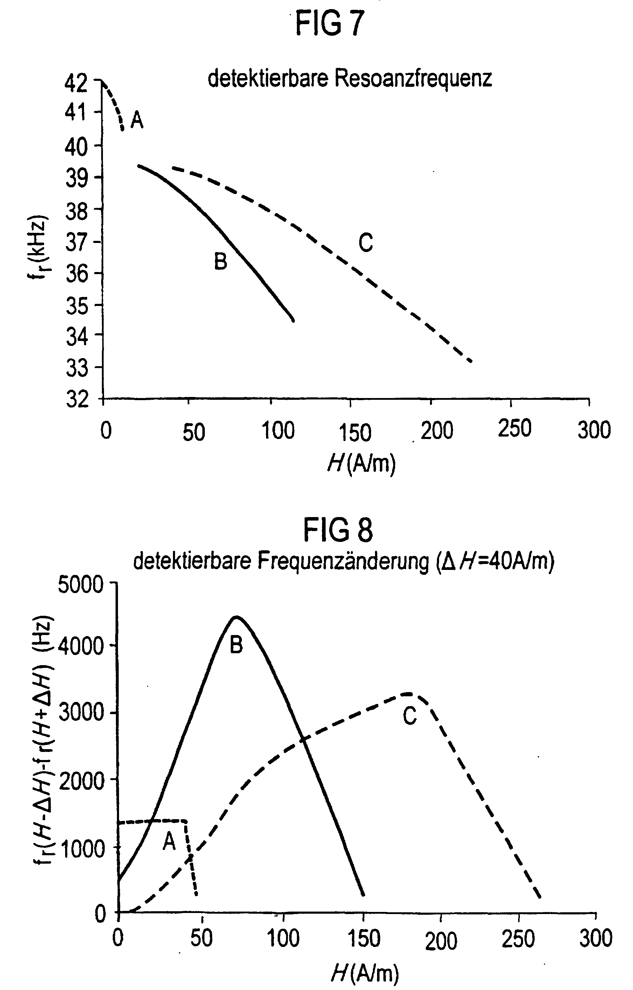

Es wird deutlich, daß nur diejenigen Resonanzfrequenzen gut detektiert werden können, bei denen die Signalamplitude beziehungsweise die Resonatorgüte ausreichend hoch ist. So sind in Figur 7 nur diejenigen Resonanzfrequenzen eingezeichnet, bei denen dies der Fall ist. Als Auswahlkriterium wurde hierbei angesetzt, daß die Resonatorgüte $Q \geq 100$ betragen beziehungsweise die Signalamplitude 2msec nach Ausschalten der Wechselfelderregung um nicht mehr als 50% unter ihren Maximalwert fallen sollte. Die beiden letztgenannten Anforderungen sind in etwa gleichbedeutend, außer bei sehr kleinen Vormagnetisierungsfeldstärken, wo aufgrund eines zu kleinen $\Delta$E-Effekts keine vernünftige magnetoelastische Kopplung mehr zustande kommen kann.

Eine weitere Anforderung ist, daß die genannte Frequenzänderung durch möglichst kleine Feldstärkenänderungen hervorgerufen wird. Entsprechend ist in Figur 8 die Frequenzänderung dargestellt, wenn man das vormagnetisierende Gleichfeld mit einem niederfrequenten Wechselfeld $\Delta$H moduliert. Bei den hier gewählten Bedingungen zeigt damit das Beispiel B die stärkste Änderung der Frequenz.

Durch die Spulen muß nicht das gesamte vormagnetisierende Feld aufgebracht werden, sondern lediglich das Modulationsfeld $\Delta$H. Der statische Grundanteil des vormagnetisierenden Feldes wird zweckmäßigerweise durch einen aufmagnetisierten hartmagnetischen Streifen aufgebracht, um ins Maximum der Frequenzänderung zu gelangen (Figur 8).

Die aufgezeigten vorteilhaften Resonatoreigenschaften werden hauptsächlich durch die Wahl der Legierungszusammensetzung und der an der Legierung erfolgten Wärmebehandlung eingestellt. Maßgeblich für die angestrebten Eigenschaften ist selbstverständlich eine hohe Magnetostriktion $\lambda_s \sim 20$ bis $50 \times 10^{-6}$ und ein wohldefinierter Wert der Anisotropiefeldstärke $H_K$. Für die Wahl der Anisotropiefeldstärke hat sich ein Bereich von $H_K \sim 200$ bis 800 A/m als vorteilhaft gezeigt.

Die in den Beispielen verwendeten Bandabmessungen, das heißt Streifenlängen von ~60mm, Bandbreiten von ~2mm, sind ebenfalls für die Verwendung von Anzeigeelementen in Warensicherungsystemen der eingangs genannten Art von Vorteil. Insbesondere, wenn man die Winkelorientierung der Streifen auswerten will, ist ein möglichst großes Verhältnis von Streifenlange zu Bandbreite günstiger als ein kleines Verhältnis.

Die Legierungszusammensetzung, das heißt die genaue Zusammensetzung der in Frage kommenden amorphen ferromagnetischen Eisen-Basis-Legierungen sind eingehend im deutschen Gebrauchsmuster 94 12 456 und in der europäischen Patentanmeldung EP 0 702 096 A1 beschrieben, deren Gegenstand hiermit ausdrücklich in die vorliegende Patentanmeldung eingebunden ist.

## Patentansprüche

1. Anzeigeelement für die Verwendung in einem magnetischen Warenüberwachungssystem, bestehend aus einem oder mehreren länglichen, duktilen, magnetostriktiven, aus amorphen ferromagnetischem Material bestehenden Streifen, welche durch Änderung eines Vormagnetisierungsfeldes $H_{Bias}$ eine Resonanzfrequenzänderung $df_r/dH_{Bias}$ erfahren, und welche durch ein magnetisches Wechselfeld zu longitudinalen, mechanischen Rescnanzschwingungen bei der Resonanzfrequenz $f_r$ anregbar sind, wobei die aus den Resonanzschwingungen resultierenden mechanischen Spannungen eine Magnetisierungsänderung der Streifen und damit eine detekierbare Veränderung des magnetischen Wechselfeldes bewirken,
wobei das Material eine flache B-H-Schleife aufweist, die bis in den Bereich der Sättigung möglichst linear verläuft, daß ein Streifen des Materials eine magnetische Anisotropie quer zur Streifenlängsrichtung aufweist, wobei die Anisotropiefeldstärke $H_{aniso}$ größer als die Vormagnetisierungsfeldstärke $H_{Bias}$ ist,

**dadurch gekennzeichnet ,**

**daß** die Änderung der Resonanzfrequenz der Streifen gegenüber der Änderung der Vormagnetisierungsfeldstärke $df_r/dH_{Bias} \geq 18,75$ Hz m/A ist und hierbei die Streifen in einem Feldbereich $dH_{Bias} \geq 80$ A/m die Resonatorgüte Q $\geq 100$ aufweisen.

**2.** Anzeigeelement nach Anspruch 1,
**dadurch gekennzeichnet,**
**daß** das amorphe ferromagnetische Material eine Sättigungsmagnetostriktion 20 ppm $\leq \lambda_s \leq 40$ ppm und eine Anisotropiefeldstärke 200 A/m $\leq H_{aniso} \leq 800$ A/m aufweist.

**3.** Anzeigeelement nach einem der Ansprüche 1 oder 2,
**dadurch gekennzeichnet,**
**daß** das amorphe ferromagnetische Material eine Zusammensetzung hat, welche aus der Formel

$$Fe_aCo_bNi_cSi_dB_eM_f$$

besteht, wobei M zumindest eines der Elemente der Gruppen $III_A$ bis $V_A$ und/oder $III_B$ bis $V_B$ ist, a bis f in Atom% angegeben sind und folgenden Bedingungen genügen

$$20 \leq a \leq 74, \ 1 \leq b \leq 8, \ 1 \leq c \leq 50, \ 0 \leq d \leq 10, \ e \leq 20, \ 0 \leq f \leq 5$$

mit den Maßgaben a+b+c<88 und $12 \leq d+e+f \leq 21$.

**4.** Verfahren zum Herstellen eines Anzeigeelements nach Anspruch 1 mit folgenden Schritten:

a) Es wird ein amorphes ferromagnetisches Band aus einer Schmelz gegossen;

b) Das Band wird in einem Magnetfeld quer zur Bandrichtung (Querfeld) einer Wärmebehandlung unterzogen;

c) Die Streifen werden abgelängt.

**5.** Verfahren nach Anspruch 4,
**dadurch gekennzeichnet,**
**daß** die Wärmebehandlung im Durchlauf erfolgt.

**6.** Verfahren nach Anspruch 5,
**dadurch gekennzeichnet,**
**daß** die Durchlaufgeschwindigkeit so gewählt wird, daß das Band für eine Wärmebehandlungszeit 0,5sec $\leq t \leq$ 30sec auf eine Temperatur 300°C $\leq T \leq$ 440°C erwärmt wird.

**7.** Verfahren nach einem der Ansprüche 4 bis 6,
**dadurch gekennzeichnet,**
**daß** während der Wärmebehandlung die B-H-Schleife gemessen wird und die Wärmebehandlungszeit und/oder die Durchlaufgeschwindigkeit und/oder die Temperatur nachgeregelt wird.

**8.** Verfahren nach Anspruch 4,
**dadurch gekennzeichnet,**
**daß** vor dem Verfahrensschritt a) die Zusammensetzung des amorphen ferromagnetischen Materials in Abhängigkeit der zu fertigenden Breite der Streifen eingestellt wird.

**Claims**

**1.** Indicating element for use in a magnetic article surveillance system, comprising one or more elongated, ductile, magnetostrictive strips consisting of amorphous ferromagnetic material, which are caused by a change in a magnetic biasing field $H_{bias}$ to experience a change in resonance frequency $df_r/dH_{bias}$, and which can be induced by an alternating magnetic field to undergo longitudinal, mechanical resonant vibrations at a resonant frequency $f_r$, the mechanical stresses resulting from the resonant vibrations bringing about a change in magnetization of the strips and consequently a detectable change in the alternating magnetic field, the material having a flat B-H loop, which follows a path which is as linear as possible into the range of saturation, in that a strip of the material has a magnetic anisotropy transversely to the longitudinal direction of the strip, the anisotropy field strength $H_{aniso}$ being greater than the magnetic biasing field strength $H_{bias}$, **characterized in that** the change in the resonant frequency of the strips with respect to the change in the magnetizing biasing field strength $df_r/dH_{bias}$ is greater than 18.75 Hz m/A and, in a field range $dH_{bias} \geq 80$ A/m, the strips have here the resonator quality $Q \geq 100$.

2. Indicating element according to Claim 1, **characterized in that** the amorphous ferromagnetic material has a saturation magnetostriction of 20 ppm $\leq \lambda s \leq 40$ ppm and an anisotropy field strength of 200 A/m $\leq H_{aniso} \leq 800$ A/m.

3. Indicating element according to either of Claims 1 and 2, **characterized in that** the amorphous ferromagnetic material has a composition which comprises the formula

$$Fe_aCo_bNi_cSi_dB_eM_f$$

where M is at least one of the elements of the groups $III_A$ to $V_A$ and/or $III_B$ to $V_B$, a to f are specified in atomic % and satisfy the following conditions

$$20 \leq a \leq 74, \ 1 \leq b \leq 8, \ 1 \leq c \leq 50, \ 0 \leq d \leq 10, \ e \leq 20, \ 0 \leq f \leq 5$$

with the provisos that $a+b+c<88$ and $12 \leq d+e+f \leq 21$.

4. Method of producing an indicating element according to Claim 1, with the following steps:

   a) an amorphous ferromagnetic band is cast from a melt;

   b) the band is subjected to a heat treatment in a magnetic field transversely to the direction of the band (transverse field);

   c) the strips are cut off to the required length.

5. Method according to Claim 4, **characterized in that** the heat treatment takes place by continuous throughput.

6. Method according to Claim 5, **characterized in that** the throughput rate is chosen such that the strip is heated up for a heat treatment time of 0.5 sec $\leq t \leq 30$ sec to a temperature of 300°C $\leq T \leq 440$°C.

7. Method according to one of Claims 4 to 6, **characterized in that** during the heat treatment the B-H loop is measured and the heat treatment time and/or the throughput rate and/or the temperature is corrected.

8. Method according to Claim 4, **characterized in that** before method step a) the composition of the amorphous ferromagnetic material is set according to the width of the strips to be produced.


**Revendications**

1. Elément d'affichage appliqué à un système de surveillance magnétique de marchandises, composé d'une ou plusieurs bandes en matière ferromagnétique amorphe, magnétostrictive, ductile, allongées, et qui par variation d'un champ de pré-aimantation ($H_{Bias}$) subissent une variation de leur fréquence de résonance ($df_r/dH_{Bias}$), et qui sont excitées par un champ alternatif magnétique en oscillations de résonance mécanique longitudinale pour la fréquence de résonance $f_r$, les tensions mécaniques résultant des oscillations de résonance produisant une variation d'aimantation des bandes et ainsi une variation détectable du champ magnétique alternatif, la matière ayant une boucle (B-H) plate, qui est aussi linéaire que possible jusque dans le domaine de la saturation et la bande de matière a une anisotropie magnétique transversale à la direction longitudinale de la bande, l'intensité de champ anisotrope ($H_{aniso}$) étant supérieure à l'intensité du champ de pré-aimantation ($H_{Bias}$),

**caractérisé en ce que**
la variation de la fréquence de résonance de la bande par rapport à la variation de l'intensité du champ de pré-aimantation est $df_r/dH_{Bias} \geq 18{,}75$ HZ m/A et la bande a dans une plage de champ $dH_{Bias} \geq 80$ A/m, une qualité de résonance $Q \geq 100$.

2. Elément d'affichage selon la revendication 1,
**caractérisé en ce que**
la matière ferromagnétique amorphe a une magnétostriction de saturation telle que $20 \text{ ppm} \leq \lambda_s \leq 40 \text{ ppm}$ et une intensité de champ anisotrope $200 \text{ A/m} \leq H_{aniso} \leq 800 \text{ A/m}$.

3. Elément d'affichage selon l'une quelconque des revendications 1 ou 2,
**caractérisé en ce que**
la matière ferromagnétique amorphe a une composition correspondant à la formule suivante

$$Fe_aCo_bNi_cSi_dB_eM_f$$

dans laquelle M est au moins un élément des groupes $III_A$-$V_A$ et/ou $III_B/V_B$, et a-f représentent des % atomiques répondant aux conditions suivantes

$$20 \leq a \leq 74,\ 1 \leq b \leq 8,\ 1 \leq c \leq 50,\ 0 \leq d \leq 10,\ e \leq 20,\ 0 \leq f \leq 5,$$

avec les limites $a+b+c<88$ et $12 \leq d+e+f \leq 21$.

4. Procédé de fabrication d'un élément d'affichage selon la revendication 1,
**caractérisé par** les étapes suivantes :

   a) on coule une bande ferromagnétique amorphe à partir d'un bain,
   b) on soumet la bande à un champ magnétique transversal à la direction de la bande (champ transversal) à un traitement thermique ;
   c) on coupe la longueur des bandes.

5. Procédé selon la revendication 4,
**caractérisé en ce que**
le traitement thermique se fait par passage.

6. Procédé selon la revendication 5,
**caractérisé en ce que**
la vitesse de passage est choisie pour que la bande subisse un traitement thermique d'une durée de $0{,}5\text{sec} \leq t \leq 30\text{sec}$ à une température de $300°C \leq T \leq 440°C$.

7. Procédé selon l'une quelconque des revendications 4 à 6,
**caractérisé en ce que**
pendant le traitement thermique on mesure la boucle (B-H) et on régule la durée de traitement thermique et/ou la vitesse de passage et/ou la température.

8. Procédé selon la revendication 4,
**caractérisé en ce qu'**
avant l'étape a) on règle la composition de la matière ferromagnétique amorphe en fonction de la largeur finale de la bande.

# FIG 1

# FIG 2

## FIG 3

## FIG 4

# FIG 5

# FIG 6

## FIG 7

detektierbare Resoanzfrequenz

## FIG 8

detektierbare Frequenzänderung ($\Delta H$=40A/m)